# EUROPEAN PATENT APPLICATION

(11) **EP 2 392 820 A1**
(43) Date of publication of application: **07.12.2011**
(21) Application number: 10735486.2
(22) Date of filing: 19.01.2010
(51) Int. Cl.: F03D 9/02, F03D 9/00

(54) **PLANT FOR EXPLOITING WIND ENERGY USING COMPRESSED AIR**

(30) Priority: 27.01.2009 ES 200900227
(71) Applicant: Universidad Politécnica de Madrid, 28040 Madrid (ES)
(72) Inventor: COBOS DE LA FUENTE, Alfonso, E-28040 Madrid (ES)
(74) Representative: ABG Patentes, S.L.
(86) International application number: PCT/ES2010/000014
(87) International publication number: WO 2010/086473

(57) **Abstract**

The present invention relates to a plant for exploiting wind energy using compressed air as fluid, comprising capturing, liquefying for storage and using said energy. Capturing with wind turbines (11), the drive shaft of which rotates the compressors producing in a first step compressed air, follows a liquefying process until the storage thereof under pressure (111). This liquid is subsequently gasified, air at the same storage pressure passing through a combustion chamber (112) and moves turbines (113) with their corresponding generators being obtained. Other industrial uses of the liquefied air are compatible (117).

## Description

### Field of the Invention

The present invention relates to a set of systems comprising a complete plant for capturing, liquefying for storage and using wind energy. The plant includes the applicable wind turbines, the devices necessary for converting wind energy into compressed air, the liquefying treatment until the storage thereof and also the different ways for the industrial use of said energy fundamentally for generating electricity.

The general application scope of the plant is in the electric energy generation sector. It is very suitable in renewable energy applications and in all the different industrial uses of the liquid air.

### Background of the Invention

The progressive exhaustion of the so called fossil fuels has caused the search for any other sustainable resource for producing energy. Great air movements, the kinetic energy of which can be captured by wind turbines and transformed into other energy forms occur naturally in our atmosphere. In the past, navigation by sail and the Persians used the first windmills (600 BC). Subsequently wind force was also used in the typical Manchego grain grinders or in the Dutch water pumps.

Recently the most common use of wind turbines is in electric wind-powered generators which are installed in groups forming wind farms. Nevertheless, it is not the sole application and the forms by means of which wind force is used today and the multiple patents protecting the technical knowledge achieved up to this date are very diverse.

Transforming the energy from the wind turbines into compressed air energy, US 2008/0047271 A1, or into compressed oils such as the sail wind turbine of US2007024058 which pumps oil to the foundation being pressurized by a gas, or into potential energy such as in W02007/001154 using the wind energy to raise water to a reservoir and using it in hydraulic turbines, has been attempted.

But the application of such variable and impossible to control wind force for electric generation has a serious storage problem given the impossibility of adapting a random production at demand and all these developments are partial forms which have not become a solution to the problem as intended by the present invention.

### Description of the Invention

The present invention describes a plant for using wind energy in circumstances such that the wind energy supply is fundamental for the development and future life on our planet.

The proposed invention achieves the following advantages:
The storage method allows providing the flow used with a constant pressure which represents an exceptional advantage for the devices which must subsequently harness said energy. This means that a highly variable energy such as wind energy is transformed into another equivalent but high quality power.

With the proposed patent, the problems of the conventional wind-powered generators caused by the wind gusts such as the one known as flicker, tension fluctuations and others, and even by the number of revolutions of the wind turbine disappear since all the possible variations are absorbed and stabilized by the storage system itself.

By having sufficient storage, the required supply is guaranteed or electricity can be injected into the network at the most interesting time.

Currently used mechanisms such as compressors, pumps, motors, pipes and exchangers reducing the cost of the installations are used.

When wind turbines with retractable blades are used, a significant improvement in the transportation and in the installation is produced. Great powers are required for the current and future generators which need blades with considerable length which makes the transportation and the assembly into a single piece difficult, therefore the blades with various sections provided from the factory already assembled in the former are of great interest. Likewise, the blades are completely retracted against strong winds, being structurally reinforced with one another, and offering the lowest resistance to dragging which causes a minimum overturn moment in the tower and consequently less need for foundation.

Other advantages are offered particularly by the method using compressed air with respect to oleohydraulics:
Return circuits which would include oil regulating reservoirs, re-pumping to the towers and other auxiliary equipment are not necessary.

The liquid air requires a very low and easily pressurizable storage volume.

Air is a cleaner fluid than oil in terms of leaks or pipe ruptures and mechanism break downs.

These and other advantages will come to light from the following description. The present invention relates to a plant for exploiting wind energy comprising a set of devices located in specialized areas. An area for capturing, another for processing the compressed air until the liquefied storage thereof and another gasification area for its application to the generation turbines.

The wind energy can be captured with wind turbines of any type included those having vertical shafts.

Then, from the hub of the wind turbine a hollow shaft transmits the torque produced to the pod. The transfer of flow and cables between the static area of pod and the rotation area in the wind turbine is performed by the hollow part of the shaft by means of a coaxial connector. Subsequently, a safety brake normally of disc type with spring and pneumatic decoupling is provided on said shaft and then a multiplier with different secondary outlet shafts provided with respective pneumatic drive clutches ending in the compressors of the first step.

At least one of the referred compressors will be of variable flow rate and all of them will have a maximum constant operating pressure. The computer control system will determine, from the mean rotation speed of the torque available and of the performances requested, the coming into service of the compressors. The charge required by the wind turbine would vary from zero up to the maximum established by the complete operation of all the compressors. When the wind is calm the wind turbine is stopped, but when the movement starts and the speed thereof reaches a determined value, the completely spread out wind turbine blades, start the rotation with nil power requirement, i.e., with the compressors disconnected. As the mean speed of the wind progresses, the variable flow rate is connected and levels the charge according to the wind availabilities. This allows the wind-powered generator to come into service at very low wind speed. When the wind increases, all the energy available with the coming into service of the rest of the compressors will be collected until the energy facilitated by the wind turbine exceeds the nominal power of the system, in which case the retraction of the movable sections in the retractable blades or the actuation of the system for changing passage in the wind turbines with blades of a single section will be produced.

The pod is orientated by pneumatic bidirectional motors with flow divider actuating by means of the corresponding cogwheels on the toothed ring fixed in the tower. The oleohydraulic option can be admitted herein for the same reasons described above. All the metal parts are connected to an earth network without damaging the lightning protection considered necessary.

The rear part of the pod is occupied by a pneumatic accumulator which allows operating all the auxiliary functions assigned to the pod even when the wind turbine is stopped.

The flow of the main compressor of the initial step passes from the pod to the tower by another coaxial flow connector and cables.

At the height of the earth surface, the flows of the different wind-powered generators are joined in a general pipe to give way to the liquefying process. Different methods for liquefying air are known, any one of them will be applicable, thus the LINDE method essentially applies a compression, the heat produced is removed and the fluid is then expanded. The method proposed in this invention comprises these schematic patterns, but adapted to the particular conditions of the intended processes.

The hot fluid of the main pipe has been compressed to the pod pressure with the drive energy obtained in the wind turbines, it must be cooled in an exchanger and then passed to a regulating tank wherein cooling is continued, whereby part of the water vapor is liquefied in the bottom, being able to be drained by opening a valve. This regulating tank has a maximum and minimum pressure switch for regulating the operation of the rest of the process. When the pressure switch indicates the maximum pressure the steps of liquefying per se are started consisting of compressing, cooling and expanding which will be repeated for the times necessary until the air becomes a liquefied portion. At this time the two-phase mixture is passed to a separating tank where the liquid is at the bottom and the gas at the top. This gas returns to the inlet of the final compressor for which a regulating capillary tube is interposed, meanwhile the liquid portion is pumped at the desired pressure passing to the storage cells. The necessary motors use gas coming from the wind turbines. The reason for liquefying is justified by the great volume reduction which the air undergoes upon being converted into liquid, which facilitates the storage and pumping thereof at high pressures.

The energy is stored in a series of cells formed by vertical cylinders of sufficient diameter containing the compressed fluid. By closing the upper base of each cylinder, a plunger having length similar to that of the cylinder and with the necessary leak tight elements is arranged. This plunger supports at its upper end a great weight located in containers. These containers having regular cross-section are constructed, at least in its lower area, from reinforced concrete. The storage cylinders are placed isolated or in groups under one and the same gravitational container always with symmetry and charge equilibrium guaranteeing the pressure equality in all the cylinders. This type of gravitational storage is the only one that maintains the constant pressure in the following gasification and power area, both if the wind turbine produce a flow rate higher than that demanded, in which case the plunger will be lifted storing the excess, and if the consumption exceeds the energy produced, in which case it must be transferred by lowering the plunger. Thus the pressure for any flow rate demanded in the following gasification and consumption area is regulated even when the wind is calm. The weight of the containers is produced with inert materials such as rocks, sand and earth, the gravitational force of which divided by the surface of the section of the cylinder supporting them shows the working pressure of the gasification process up to the inlet of the turbines. The cylinder area will be at a suitable temperature and the necessary heat insulation will be produced to reduce the gasification within the cylinder as a natural "auto-refrigeration" process.

Gas, liquid or a mixture of both can come out from the storage cylinders, but in any case at very low temperature. The following gasification phase aims to place at the inlet of the generation turbine gas at the outlet pressure of the storage cylinders and at a suitable temperature for a good process performance. It will require a significant amount of heat which will be obtained from all the exchangers located after the compressors and of the final compressor which will recover the heat of the gases exiting the turbine. To guarantee the temperature suitable at the inlet of the turbine, it will be preceded by an automatic combustion chamber. And finally the mentioned turbine, the drive shaft of which is connected to the electric energy generator. It should be noted that on the shaft of this turbine the compressor is not arranged as commonly happens in the gas thermal centres, device absorbing between 40 and 50% of the power produced by the turbine. In the method proposed in this patent, the pressure comes from the storage cells since the exchangers and the combustion chamber are isobaric devices. This represents an additional economical advantage and like in the exchangers the compression heat and heat exiting the main turbine is recovered, it will only need a small amount of combustion heat which represents a significant environmental improvement. It should be said here that the generation turbines work at a very high pressure whereby gases with temperatures as high as in the conventional turbines are not required, the construction of the vanes being simplified, this will lead to intermediate reheating.

The harnessing of the achieved energy has multiple applications. It is normally provided with an electric generation area with different groups for supplying different powers, each formed by a turbine with its generator. As the pressure for any demanded flow rate and the temperature at the inlet of the turbine is guaranteed, the operation thereof is constant and by synchronizing the frequency can be directly connected to network without the need of converters. This method eliminates the terrible effect of the variations in wind gusts, as well as the harmonics and any other occasional variation giving a tension typical of a constant operation of the generator.

The storage and use method described in this patent can be applied for difficult to regulate energies of other origins different from that indicated and difficult to regulate, such as photovoltaic energies, hydraulic energies and others.

The liquefied air can be used with any one of the possible industrial purposes from suitably located uptakes.

Nevertheless, there are many devices which have not been indicated in this description and which are included in the proposed invention such as filters, wind inclination meter and orientation system, some control elements such as pressure switches, multiple gravitational cell level indicators, various flowmeters, regulating elements such as valves, pressure regulators and flow rate regulators, other auxiliary devices.

A control centre must be added to all these elements; the decisions for storing and supplying energy such as the time for injecting electric energy to the network are taken herein. The control system of the different actuators of the installation can be a computer system centered or dispersed through areas as appropriate.

The possibility of storing energy attains special relevance for the generation systems known as distributed generation systems, when point deficit circumstances happen, such disequilibrium being able to be alleviated regardless of whether there is sufficient wind. Evidently the advantages multiply in the isolated systems in which a continuous energy supply can be guaranteed by providing the suitable storage. In these circumstances, and for great powers, it will be advisable to divide the generation turbines into several ones for adapting more easily to the demand.

### Brief Description of the Drawings

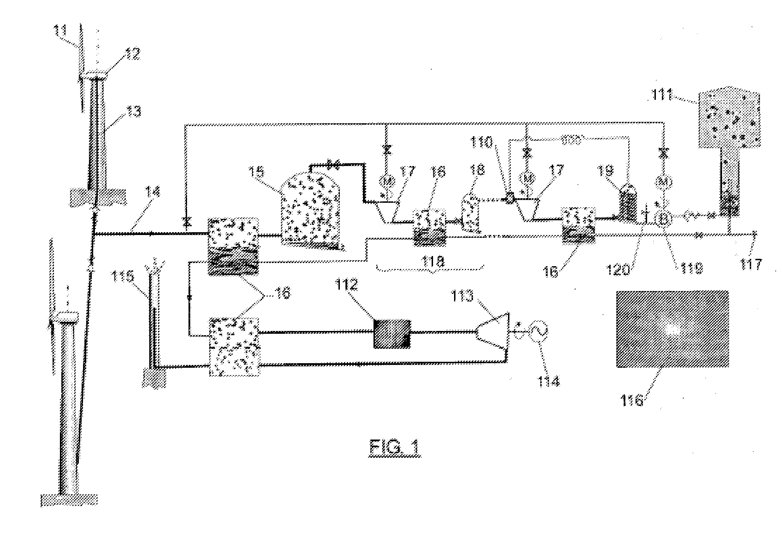

Figure 1 corresponds to a schematic view of a complete installation according to the proposed patent. The most characteristic areas and the arrangement of the basic elements thereof can be observed therein. In the capturing area the wind turbines, 11, with its pod, 12, and tower, 13 are indicated. The compressed air in the pods goes down the towers and comes together in a main pipe, 14, to a regulating tank, 15. The liquefying means 118 where the liquefying is produced in a series of steps or scaling comprise: exchangers, 16, acting as cooling means, compressors or compressing means, 17, and expansion means, 18. This process ends in the separation receptor, 19, from where the liquid is pumped through pumping means, 119, to the cells or storing means, 111. The gasification is produced by providing heat in the exchangers, 16, acting as heating means, and in the combustion chamber, 112, to the main turbine, 113, connected to the generator, 114. The exiting gases are expulsed by a chimney, 115. Other uses of the liquefied air will be provided from the corresponding uptake, 117, and all of it managed by a control centre, 116.

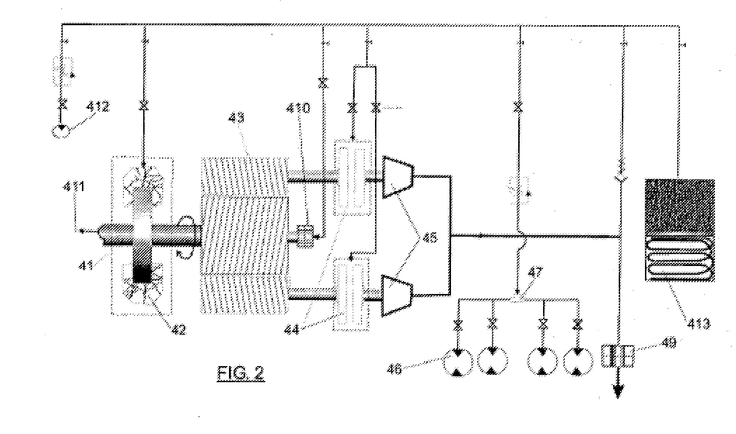

Figure 2 also schematically shows the basic elements of the pod with the pneumatic circuits thereof. The shaft of the wind turbine penetrates into the pod, 41, and a brake, 42, is place thereafter, the multiplier box with two or four secondary gears, 43, provided with respective clutches, 44, follows before the main compressors, 45. Furthermore, there are orientation motors, 46, provided with a flow divider, 47. The concentric rotating connectors: one in the main pipe, 49, for passing to the tower and other secondary connector, 410, which guarantees the passage of fluid and cables from the pod to the wind turbine, 411. A motor, 412, allows the production of the electric energy for maintenance in the pod. The accumulator 413 allows maintaining the compressed air for any use in the pod, although the wind turbine has been stopped.

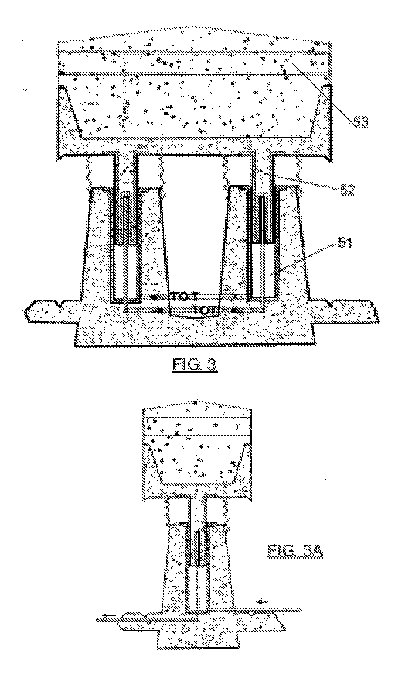

Figures 3, 3A show the cross-sectional components of the storage area with tetracellular cells, and their fluid storage cylinders, 51, plungers, 52, and on them weight containers, 53. Figure 3A shows an embodiment with a single cylinder.

### Description of a preferred embodiment of the Invention

A complete description of a preferred embodiment which will be made below by way of example with non-limiting character and susceptible to all those detail modifications which do not fundamentally alter its essential characteristics.

This preferred embodiment is made up of three well differentiated areas: capturing, liquefying for storage and gasification for harnessing the energy obtained.

In the pod, there are successively arranged on the shaft 41, a safety brake 42, usually of disc type with a spring and pneumatic or if preferred hydraulic decoupling, and subsequently a multiplier 43 with various secondary outlet shafts provided with respective pneumatic or hydraulic drive clutches 44 ending in the main compressors 45 for starting the pressure circuit .At least one of said compressors will function in a wide variable flow rate range and all will have a constant nominal operating pressure.

The start up of the wind turbine 11, after a stop due to lack of wind, will be carried out with the brake 42 and the decoupled clutches 44, thus, the energy necessary for the start up is minimal and once the inertia forces are surpassed the variable flow-rate compressor will come into operation, which will keep increasing its flow as the speed of the wind allows it. The other compressors will successively come into operation, until the energy produced by the wind turbine exceeds the nominal pumping power, in which case the retraction system of the movable sections in the retractable blades will come into operation.

The orientation system of the pod controls the start up of the oleohydraulic or pneumatic bidirectional orientation motors 46 regulated by a flow orientation divider 47 operating on cogwheels meshing in a toothed ring of the tower 13.

An auxiliary pressure accumulator 413 which will allow the operation of all the auxiliary functions of the pod including the oleohydraulic applications estimated even when the wind turbine is stopped is arranged in the rear part of the pod.

For the production of auxiliary electric energy in the wind turbine, a pneumatic motor with generator 412 is provided.

When passing from an area which turns or can turn another static one, a coaxial flow connector and cables must be used, thus occurring for the main driving 14 of high pressure falling from the rotating pod 12 to the static tower 13 needing the coaxial adaptor 49 and for the passing of fluid and cables from pod to the wind turbine the adaptor 410.

The compressed flows in the different pods come together in a main pipe 14, they are then cooled and accumulate in a regulating reservoir 15, which allows the operation of the wind turbines and pod compressors with very low winds, without affecting the performance of the following liquefying process, which will only come into operation when there is sufficient fluid in this reservoir and a maximum pressure is reached, thus remaining until the minimum stipulated pressure.

The liquefying is produced in various scaling or steps in the liquefying means 118, comprising compressing means 17, the compressed air is then passed through hot side of an interchanger acting as cooling means 16, transferring heat, and as a final step an expansion, collecting the gas in a reservoirs acting as expansion means 18 with possibilities of draining the condensed liquid water. The final step achieves, after the expansion, a significant fraction of liquefied air the two-phase mixture being placed in a separating reservoir 19. The liquid fraction is pumped 119 at the pressure of storage 111 and the gas returns to the entrance of the last compressor collaborating in the drop of its input temperature by means of a mixture exchanger 110.

The high pressure which can occur to the liquefied air allows storing a lot of energy in relatively small areas such as in the regulating cylinders 51. They are constructed with steel sleeves, covered with reinforced concrete and thermally insulated. The plunger 52 equally covered with steel alloy and concrete therein, with exception to the central part occupied by a drill in which the outlet tube loosely penetrates the evacuation of the possible gas existing in the upper part of the cylinder being allowed. Large containers with weights 53 which can be easily assembled are arranged on the plungers, Figure 3A, or in tetra-cylindrical cells, Figure 3, both cases of concrete and plates filled with rocks and earth.

The main outlet duct passes through the cold side of the previously indicated exchangers 16, collecting the compression heat of the liquefying phase and of the gases exiting the turbine 113. The gases then enter in an automatic isobaric combustion chamber 112 producing the exit of the gases at a determined temperature for accessing the main turbine 113 with intermediate reheating the shaft of which moves the generator 114. The gases coming out from the turbine are still hot, they transfer heat through the last interchanger and are released into the atmosphere through a tower or chimney 115.

At the outlet of the cylinders an uptake for industrial applications of the liquefied air at high pressure 117, or at medium pressure 120, is arranged.

The energy which is stored in the cylinders has a constant pressure regardless of the operation of the previous capturing and liquefying areas, and at this pressure it is input into the following gasification areas and electric generating turbines regardless of the demanded flow. Given that the temperature of the gases reaching the turbine is also maintained constant, the synchronization of the frequency of generators with the network will be easy and without the need of using converters.

The plant is controlled and managed in an annex building 116.

## Claims

1. A plant for exploiting wind energy by means of compressed air **characterized in that** it comprises:
1a) wind energy capturing means by means of wind turbines (11) configured for compressing air in the pod (12);
1b) air liquefying means (118), liquefied air pumping means (119) and storing means (111) wherein the liquefying means (118) comprise a plurality of scaling configured for reducing the inner energy of the gas and for extracting the water vapor content, the liquefying means (118) comprising:
1b1) compressing means (17);
1b2) cooling means (16);
1b3) expansion means (18) configured for collecting the drained water vapor.
1c) harnessing means by means of systems selected from liquefied air service systems with industrial purposes (117), electric generation systems (114) by means of gasification and combinations thereof.

2. The plant for exploiting wind energy by means of compressed air according to claim 1 **characterized in that** the following are successively placed on the shaft (41):
2a) a safety and decoupling oleohydraulic/pneumatic brake (42);
2b) a multiplier having a plurality of secondary output shafts (43) provided with oleohydraulic/pneumatic drive clutches (44) ending in the compressors (45) wherein the main circuit of compressed air in a first step of compression starts.

3. The plant for exploiting wind energy by means of compressed air according to claim 2, **characterized in that** one of the compressors (45) functions at variable angular velocity to generate a variable range of flow rates and to generate a pressure in accordance with a pressure from the receiving tank (15).

4. The plant for exploiting wind energy by means of compressed air according to claim 3, **characterized in that** the wind turbine (11) has a pod (12) orientation system configured for driving on least two oleohydraulic/pneumatic bidirectional orientation motors (46) regulated by a flow orientation divider (47), driving the cogwheels of the orientation motors on a toothed ring of the tower (13).

5. The plant for exploiting wind energy by means of compressed air according to claim 4, **characterized in that** the pod comprises an auxiliary pneumatic compressed air accumulator (413) in the rear part of the pod (12) configured for allowing the operation of all the auxiliary functions of the pod even when the wind turbine (11) is stopped.

6. The plant for exploiting wind energy by means of compressed air according to claim 5, **characterized in that** it further comprises auxiliary means configured for functioning with a fluid selected from compressed air and hydraulic oil according to the precision of movement required.

7. The plant for exploiting wind energy by means of compressed air according to claim 6, **characterized in that** it further comprises:
7a) a main pipe (14) configured for collecting the compressed air coming from the wind turbines (11) and obtaining collected air;
7b) cooling means (16) configured for cooling the collected air and obtaining cooled air;
7c) a regulating tank (15) configured for storing the cooled air in a pressure range between a maximum and a minimum for feeding liquefying means (118).

8. The plant for exploiting wind energy by means of compressed air according to any of claims 1-7, **characterized in that** it further comprises a final tank configured as a separating tank (19) for containing liquefied air in the base thereof and gas in the upper part thereof.

9. The plant for exploiting wind energy by means of compressed air according to claim 8, **characterized in that** it further comprises a feedback connecting the gas of the separating tank (19) with the entrance of a final compressor of the compressing means (17) through a mixture exchanger (110).

10. The plant for exploiting wind energy by means of compressed air according to claim 9, **characterized in that** the liquid of the separating tank (19) is pumped at high pressure for storage in a plurality of storage cylinders (111).

11. The plant for exploiting wind energy by means of compressed air according to claim 8, **characterized in that** the energy storing and regulating means comprise a plurality of vertical cylinders (51) having plungers (52) and leak tight elements, wherein there is a weight container (53) in the head of each plunger (52) configured to be filled with homogenously distributed dense materials.

12. The plant for exploiting wind energy by means of compressed air according to claim 11, **characterized in that** the cylinders (51) are selected from:
12a) only cylinders ;
12b) cylinders grouped in cells of at least four elements;
configured for assuring the same pressure in all the cylinders (51), for allowing a regulation of pressure in the following gasification and electric generation areas.

13. The plant for exploiting wind energy by means of compressed air according to claim 12, **characterized in that** the uptake of the storage cylinders (51) is configured with a straight tube parting from the base thereof and traverses an opening made on the central part of the plunger (52) to remove the gas produced by auto-refrigeration and to prevent the accumulation thereof filling up the cylinder and impeding new inputs of liquefied air.

14. The plant for exploiting wind energy by means of compressed air according to claim 13, **characterized in that** the fluid which is extracted from the storage cylinders (51) receives heat as it passes through the cold side of the exchangers (16):
14a) located after the compressions,
14b) located at the outlet of the gases of the turbine,
configured for extracting all the heat possible and for leaving the fluid in gas form, the temperature of which is adapted in an automatic combustion isobaric chamber (112) in order to achieve an optimum performance in the turbines (113).

15. The plant for exploiting wind energy by means of compressed air according to claim 14, **characterized in that** the turbines can have intermediate reheating and the exiting gases, after transferring their heat in the last exchanger, are expelled through a chimney (115).

16. The plant for exploiting wind energy by means of compressed air according to claim 15, **characterized in that** one or several turbines receive the gas at the storage regulated pressure and with the suitable temperature to move electric generators (114) in constant operating conditions.

17. The plant for exploiting wind energy by means of compressed air according to claim 16, **characterized in that** the operation of the plant is selected from:
17a) simultaneous capturing, storing and generating operation,
17b) a partial operation with the suitable bypass in the general line of the method provided:
17b1) for storing only liquefied air,
17b2) for discharging only stored energy,
17c3) for directly using the compressed air of the wind turbines in generation.

18. The plant for exploiting wind energy by means of compressed air according to claim 17, **characterized in that** the liquefied air can be used for different industrial uses from uptakes at a pressure selected from:
18a) high pressure (117);
18b) medium pressure (120).
